# EUROPEAN PATENT SPECIFICATION

(11) **EP 3 047 964 B1**
(45) Date of publication and mention of the grant of the patent: **24.04.2019**
(21) Application number: 13894005.1
(22) Date of filing: 18.09.2013
(51) Int. Cl.: B29D 35/12, A43B 13/18

(54) **FOOTWEAR SOLE**
SCHUHSOHLE
SEMELLE DE CHAUSSURE

(43) Date of publication of application: 27.07.2016
(73) Proprietor: Desarrollo Integral Del Molde, S.L., 31013 Pamplona, Navarra (ES)
(72) Inventor: IZQUIETA ANAUT, José María, 31013 Pamplona (Navarra) (ES)
(74) Representative: Capitán García, Maria Nuria
(86) International application number: PCT/ES2013/070649
(87) International publication number: WO 2015/040247

(56) References cited:
- EP-A1- 0 185 781
- EP-A1- 0 185 781
- EP-A1- 2 197 644
- EP-A2- 0 293 034
- BE-A- 567 928
- ES-U- 1 041 611
- ES-U- 1 041 611
- FR-A1- 2 424 716
- FR-A1- 2 863 458
- GB-A- 2 152 797
- GB-A- 2 297 678
- US-A- 4 536 974
- US-A- 4 663 865
- US-A1- 2002 189 132
- US-A1- 2003 106 240
- US-A1- 2007 090 575

## Description

### TECHNICAL FIELD OF THE INVENTION

The present invention falls within the field of production of soles for footwear.

In particular, the invention relates to a sole for footwear, achieving greater comfort for the user who wears it.

### BACKGROUND OF THE INVENTION

There is known moulding of soles, i.e., the lower portion of footwear, from rubber or thermoplastic materials, with the aim of providing footwear having as anatomical as possible support for the user's foot, trying to avoid damaging the feet through the deformation or compression they experience every time the user's weight is exerted on the footwear, which strikes the ground repeatedly when walking or running.

This is why so-called 'shock-proof' soles have been designed, which are usually characterized by having different shock absorption areas or zones in accordance with the anatomy and physiology of the user's foot. To this end, there are commonly provided for soles for footwear having zones of greater compressibility and/or softness in the foot areas which experience the direct impact when the footwear is placed on the ground on advancing.

For example, patent EP 2366300, published on 21 September 2011, relates to a lower portion of footwear consisting in a monolithic structure moulded in rubber or made of thermoplastic materials, wherein the outer surface of the sole consists of a series of transverse tubular profiles and its inside is designed with a discontinuous structure which supports the user's feet with a series of straight flanges or flaps separated by intermediate grooves. The flaps are of two kinds and are disposed in an alternate manner. A first kind of flaps can be resiliently deformed, i.e., they can be selectively compressed in accordance with the force which the user's foot exerts on it. On the other hand, the flaps of the second kind ensure the sole will not collapse entirely under the feet's weight. However, since the flaps are arranged at a right angle in relation to the bearing surface of the footwear, the foot bears perpendicularly on them, crushing them without taking full advantage of the resilient properties of the material of the flaps in order to achieve a much softer and comfortable support for the user's foot.

It is known the patent FR2424716, which discloses a moulded rubber or plastic shoe sole incorporating a series of hollow chambers separated by flexible webs inclined forwards. Progressive compression of the sole from the heel forwards during walking pumps air.

It is known the patent BE567928, which discloses a shoe sole made of an elastic material, with a series of elements inclined towards the rear, extending and being curved transversely and protruding in parallel.

It is known the patent EP0185781, which discloses a shoe sole made from plastic material or rubber, comprising a continuous outsole layer with an integrally moulded edge and elastically deformable webs which are disposed in the heel and ball regions of the sole that are enclosed by the sole edge, said webs being arranged above the outsole layer at an angle to the sole top surface and having their upper edges disposed in the sole top surface, said webs are arranged in lattice fashion and with their intersection points ascend obliquely forwardly from the outsole layer.

It is known the patent US2007/090575, which discloses a method of polymerizing a shoe sole of colored patterns inside a mode, comprising a top pattern, a middle pattern and a bottom pattern, enabling a meltable object to be infused into the mode for forming the mold shape. The method is more applicable to objects with cambered surfaces and/or large areas.

It is known the patent ES1041611, which discloses a shoe sole, obtained by injection molding of an elastomeric material, in which in the front zone incorporates a plurality of transversely elongated prismatic hollow blocks, each of said hollow blocks having been provided with an intermediate opening of the upper and free base and incorporating in its interior a plurality of uniformly distributed transverse tabs, so that said blocks offer an adequate or elastic deformability.

It is known the patent US2002/189132, which discloses a shoe sole of rubber, a rim rises from and extends around the bottom of the sole, a first middle plate, a second middle plate and a third middle plate are formed in the waist of the sole and widthwise partition the inside of the rim, the first and third plates are positioned on the front and rear sides respectively of the second plate, the first and second plates have air openings respectively formed through upper portions thereof.

It is known the patent FR2863458, which discloses a shoe sole that consists of a layer of a flexible material such as an elastomer containing reinforcing elements that are slender in shape, i.e. with crosssections inferior to their length, and extend to a height equivalent to at least half the thickness of the sole. The reinforcing elements, which are made from an optionally reinforced or expanded elastomer material and enlarged at the base, are embedded in the flexible material of the sole and are angled at 30 - 150 degrees to its outer surface. They are also shaped to promote deformation by flexion.

It is known the patent US4663865, which discloses a shoe sole having a network of spaced ribs integral with the sole, located between the heel portion and the plantar region, and defines a bearing surface for a resilient cushion material. A second series of ribs, also integral with the sole and having a height greater than the ribs of the network, is located at the shank area to also form a bearing surface to support the arch of the wearer's foot.

On the other hand, should it be desired to change the straight configuration of the known flaps to offer more comfort to the user's foot, this would entail making the profile followed by the inner face of the sole more complex. Therefore, it would be impossible to use the traditional surface machining tools, e.g., a mill, for producing the moulds of the sole since it is not possible with said tool to reach all the nooks and crannies of the profile to entirely shape the moulding surface.

Thus, it is necessary to overcome the aforementioned drawbacks, to be able to produce in a simple, effective and cheap manner a mould for forming a sole for footwear, as well as for said sole to entail greater comfort for the user wearing it.

### DESCRIPTION OF THE INVENTION

The present invention is defined by the independent claim.

The object of the present invention is a sole for footwear, including protuberances which compress and bend during the footstep.

Regarding the mould for producing the sole, which is not part of the invention, such mould discloses projections disposed inclined in relation to the surface of the footstep of the sole to be moulded. Said projections are designed and separated from each other such that they are only formed by moulding, since it is not possible to insert a machining tool in the separation existing between said projections, nor is it possible either to undertake the machining of the recesses between the projections, the moulding is by 3D printing or by lost-wax casting.

The sole for footwear is formed using the aforementioned mould, inside of which protuberances are formed which compress and bend during the footstep, wherein the protuberances are disposed inclined in relation to the surface of the footstep.

As can be seen, the moulding surface comprised of inclined projections separated by recesses is able to form, inside the sole, the protuberances in an inclined manner in relation to the surface of the footstep, the protuberances are interrupted, along their length, by at least an intermediate notch, and/or are separated from a gluing zone of the sole by means of end notches. Thus, when the user's foot bears on the sole, said protuberances compress at their upper portion. Since said protuberances are arranged in an inclined manner, instead of being crushed withstanding the weight of the user's foot, they bend and cushion the vertical force generated by said weight on the sole, a much softer and comfortable support being achieved. The notches enhance the cushioning effect of the protuberances.

### BRIEF DESCRIPTION OF THE DRAWINGS

This specification is supplemented with a set of drawings.
Figure 1 depicts a cross-sectional side view of a mould for producing soles for footwear.
Figure 2 depicts a cross-sectional side view of a first embodiment of the protuberances of a sole for footwear produced using the mould of Figure 1 and not belonging to the invention, wherein said protuberances are formed by a partition inclined in relation to the surface of the footstep.
Figure 3 depicts a cross-sectional side view of a second embodiment of the protuberances of the sole for footwear produced using the mould of Figure 1 and not belonging to the invention, wherein said protuberances are formed by a curved partition inclined in relation to the surface of the footstep.
Figure 4 depicts a cross-sectional side view of the protuberances of the sole for footwear produced using the mould of Figure 1, wherein said protuberances are formed by an angular partition having a first straight portion and a second portion inclined in relation to the surface of the footstep.
Figure 5 depicts a top view of a first embodiment of the orientation of the protuberances of Figures 2, 3 or 4 on the sole for footwear produced using the mould of Figure 1, wherein said protuberances extend parallel to the longitudinal axis of the sole.
Figure 6 depicts a top view of a second embodiment of the orientation of the protuberances of Figures 2, 3 or 4 on the sole for footwear produced using the mould of Figure 1, wherein said protuberances extend transversely to the longitudinal axis of the sole.
Figure 7 depicts a top view of a third embodiment of the orientation of the protuberances of Figures 2, 3 or 4 on the sole for footwear produced using the mould of Figure 1, wherein said protuberances extend obliquely to the longitudinal axis of the sole.
Figure 8 depicts a top view of a fourth embodiment of the orientation of the protuberances of Figures 2, 3 or 4 on the sole for footwear produced using the mould of Figure 1, wherein said protuberances extend perpendicularly and obliquely to the longitudinal axis of the sole.
Figure 9 depicts a top view of a fifth embodiment of the orientation of the protuberances of Figures 2, 3 or 4 on the sole for footwear produced using the mould of Figure 1, wherein a first group of said protuberances extends parallel and a second group perpendicularly to the longitudinal axis of the sole.
Figure 10 depicts a top view of a sixth embodiment of the orientation of the protuberances of Figures 2, 3 or 4 on the sole for footwear produced using the mould of Figure 1, wherein a first group of said protuberances extends obliquely to the longitudinal axis of the sole and a second group perpendicularly to said first group.
Figure 11 depicts a top view of a first embodiment of the layout of the protuberances of Figures 2, 3 or 4 on the sole for footwear produced using the mould of Figure 1, wherein the protuberances are formed in an arched manner.
Figure 12 depicts a top view of a second embodiment of the layout of the protuberances of Figures 2, 3 or 4 on the sole for footwear produced using the mould of Figure 1, wherein the protuberances are formed in a corrugated manner.
Figure 13 depicts a top view of a third embodiment of the layout of the protuberances of Figures 2, 3 or 4 on the sole for footwear produced using the mould of Figure 1, wherein the protuberances are formed in a crooked manner.
Figure 14 depicts a top view of another embodiment of the layout of the protuberances of Figure 2, 3 or 4 on the sole for footwear produced using the mould of Figure 1, wherein protuberances formed in a crooked manner, on the centre of the sole, are combined with protuberances formed in a corrugated manner on the heel.
Figure 15 depicts a top view of a sole for footwear, including any of the embodiments shown in Figures 5 to 14, wherein the protuberances are interrupted by intermediate notches and separated from the gluing zone of the sole by means of end notches.
Figure 16 depicts a cross-sectional front view of the sole for footwear of Figure 15.

### DETAILED EXPLANATION OF THE PREFERRED EMBODIMENT OF THE INVENTION

An embodiment is shown below with reference to the figures set out.

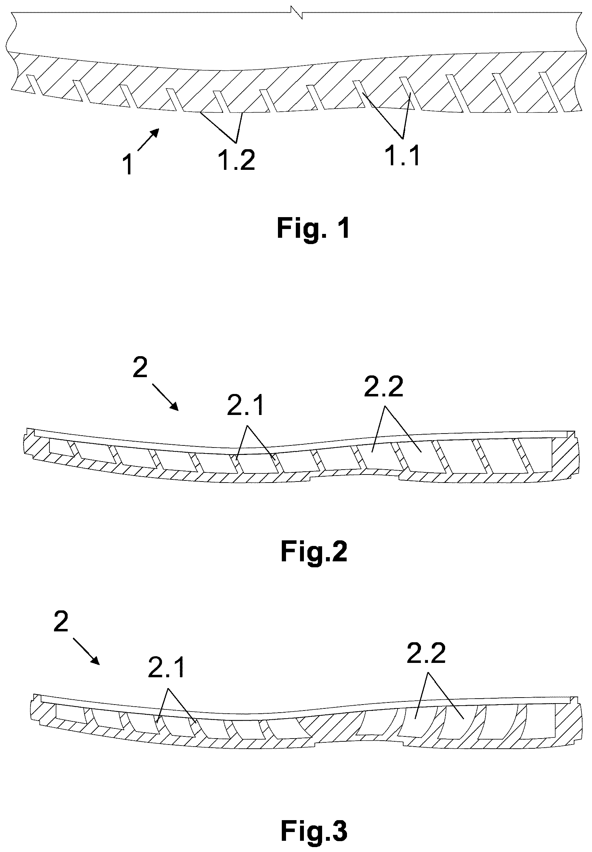

As shown in Figure 1, the mould for producing soles for footwear includes a moulding surface (1) consisting of a plurality of recesses (1.1) and projections (1.2) forming, inside the sole (2), protuberances (2.1), seen in Figures 2, 3 and 4. Said protuberances (2.1) compress and bend during the footstep.

On the other hand, the projections (1.2) are arranged inclined in relation to the surface of the footstep. Said projections (1.2) are designed and separated from each other such that they may only be formed by moulding, by 3D printing or by lost-wax casting.

As shown in Figure 1, the preceding is due to the recesses (1.1) separating the projections (1.2) being very narrow and inclined, which do not allow the tool (not shown in the figures) of conventional surface machining means, e.g., a mill, to penetrate between two projections (1.2) and carries out the full machining of the corresponding recess (1.1).

The narrow recesses (1.1) of the moulding surface (1) match the inclined protuberances (2.1) formed by said moulding surface (1) inside the sole (2). Likewise, the projections (1.2) match notches (2.2), also narrow, formed in the sole (2).

Thus, it is possible to reproduce or copy exactly, inside the sole (2), the desired surface configuration which has been moulded on the moulding surface (1), a sole (2) for footwear being obtained (see Figures 2, 3 and 4), with the inside formed by protuberances (2.1), separated by notches (2.2), which compress and bend on taking a footstep.

As shown in Figure 2, in an embodiment not forming part of the invention, the recesses (1.1) of the moulding surface (1) form the protuberances (2.1) as a partition inclined in relation to the surface of the footstep.

In a second embodiment, which does not form part of the invention, seen in Figure 3, the protuberances (2.1) are formed by the recesses (1.1) as a curved partition inclined in relation to the surface of the footstep.

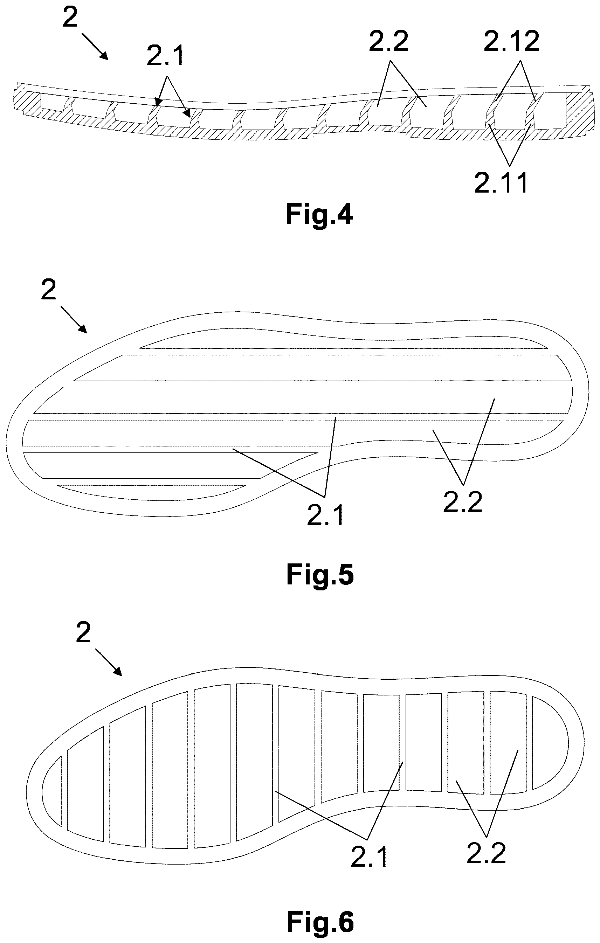

Likewise, Figure 4 shows the protuberances (2.1), wherein the latter have been formed by the recesses (1.1) of an angular partition having a first straight portion (2.11) and a second portion inclined (2.12) in relation to the surface of the footstep.

On the other hand, the recesses (1.1) and projections (1.2) extend parallel, transversely or obliquely in relation to the longitudinal axis of the imprint of the sole (2).

Thus, as shown in Figure 5, in a first embodiment of orientation of the protuberances (2.1), they can remain extended parallel to the longitudinal axis of the sole (2).

Figure 6 shows a second embodiment of orientation of the protuberances (2.1), wherein the latter can remain extended transversely in relation to the longitudinal axis of the sole (2).

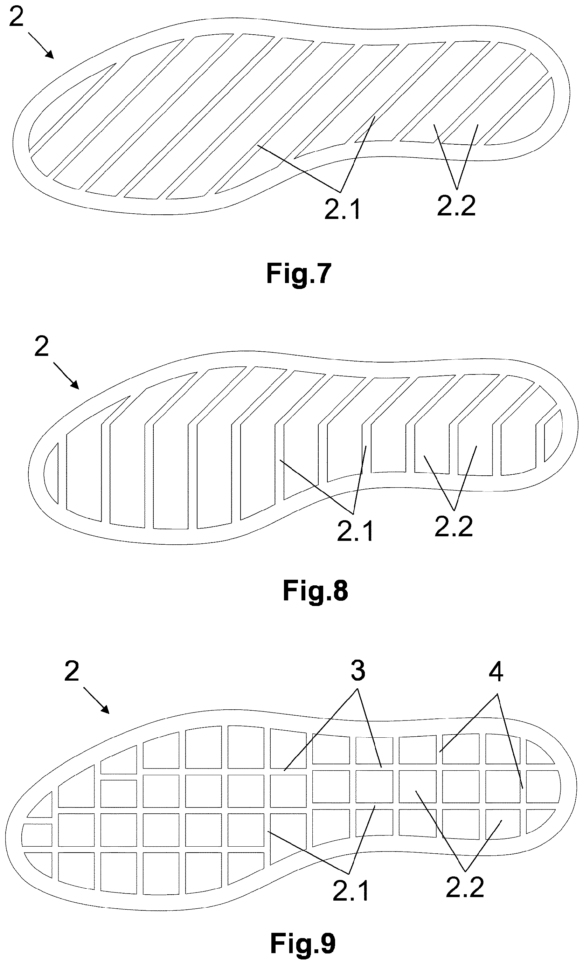

In a third embodiment of orientation of the protuberances (2.1), shown in Figure 7, they can extend obliquely in relation to the longitudinal axis of the sole (2).

Likewise, the recesses (1.1) and projections (1.2) can extend, first, perpendicularly to the longitudinal axis of the imprint of the sole (2), and then, obliquely to said longitudinal axis.

In this case, a fourth embodiment is obtained of the orientation of the protuberances (2.1), seen in Figure 8, wherein said protuberances (2.1) extend, first, perpendicularly to the longitudinal axis of the sole (2), and them, obliquely to said longitudinal axis.

On the other hand, the moulding surface (1) could be formed by a first and a second group of recesses (1.1) and projections (1.2), wherein said first group extends parallel to the longitudinal axis of the imprint of the sole (2) and the second group extends perpendicular to said longitudinal axis.

In this case, as shown in Figure 9, a fifth embodiment is obtained of the orientation of the protuberances (2.1), wherein a first group (3) of said protuberances (2.1) extends parallel to the longitudinal axis of the sole (2) and a second group (4) extends perpendicularly to said longitudinal axis.

Likewise, the first group of recesses (1.1) and projections (1.2) of the moulding surface (1) can extend obliquely to the longitudinal axis of the imprint of the sole (2) and the second group can remain extended perpendicularly to the first group.

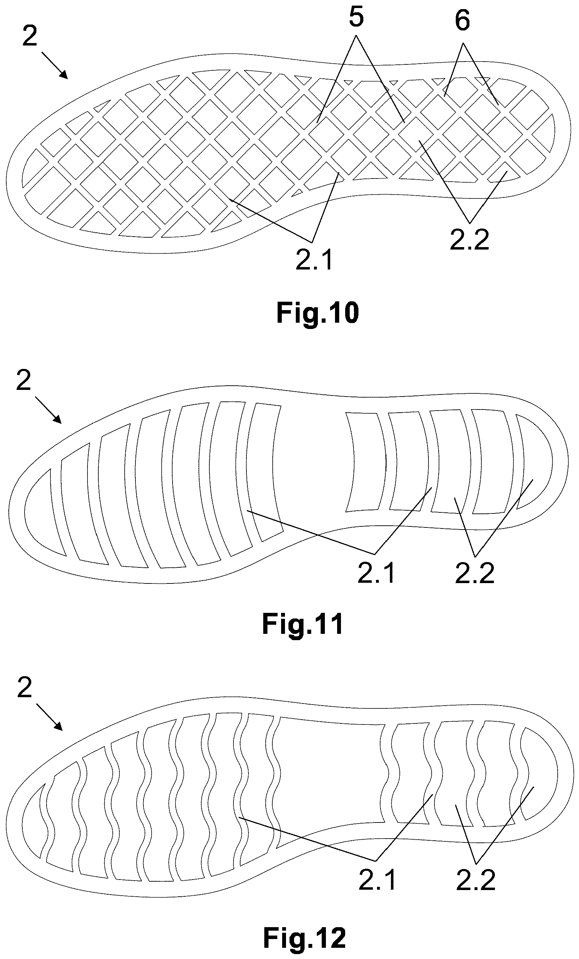

In this case, as shown in Figure 10, a sixth embodiment is obtained of the orientation of the protuberances (2.1), wherein the first group (5) of said protuberances (2.1) extends obliquely to the longitudinal axis of the sole (2) and the second group (6) remains extended perpendicularly to said first group (5) .

It can be understood that it is possible to obtain dissimilar embodiments of orientation of the protuberances (2.1) by combining the preceding embodiments in the forming of the different zones of bearing of the user's foot on the sole (2). For example, in the zone of the centre of the sole, the protuberances (2.1) can be extended obliquely in relation to the longitudinal axis of the sole (2), and in the heel zone, the protuberances (2.1) can be formed extended parallel to said longitudinal axis.

On the other hand, the recesses (1.1) and projections (1.2) of the moulding surface (1) can be formed in an arched, corrugated or crooked manner.

Thus, in a first embodiment of the layout of the protuberances (2.1), seen in Figure 11, the recesses (1.1) and projections (1.2) form the protuberances (2.1) in an arched manner.

Likewise, in a second embodiment of the layout of the protuberances (2.1), as shown in Figure 12, the protuberances (2.1) are formed in a corrugated manner.

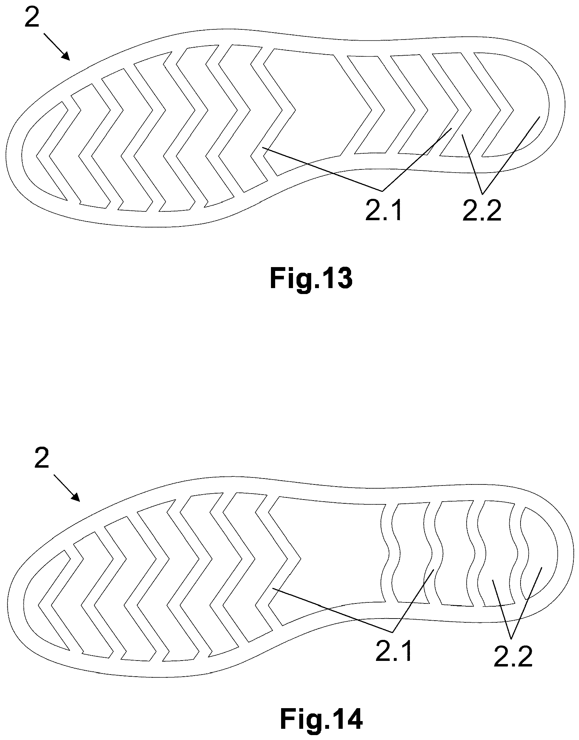

And in a third embodiment of the layout of the protuberances (2.1) (see Figure 13), the protuberances (2.1) are formed in a crooked manner.

It is also possible to combine the previously described layout embodiments to form the different zones of bearing of the foot on said sole (2). For example (see Figure 14), by drawing in a crooked manner the protuberances (2.1) made on the zone of the centre of the sole (2), and in a corrugated manner, those of the heel zone.

Likewise, it is possible to carry out any variant of combination of the different embodiments of orientation and layout of the protuberances (2.1) to form the different zones of bearing of the user's foot on the sole (2). The chosen combination will be reproduced, preferably by 3D printing, on the moulding surface (1), and the latter will be used to eventually produce the sole (2) of the footwear with the chosen combination as the inside.

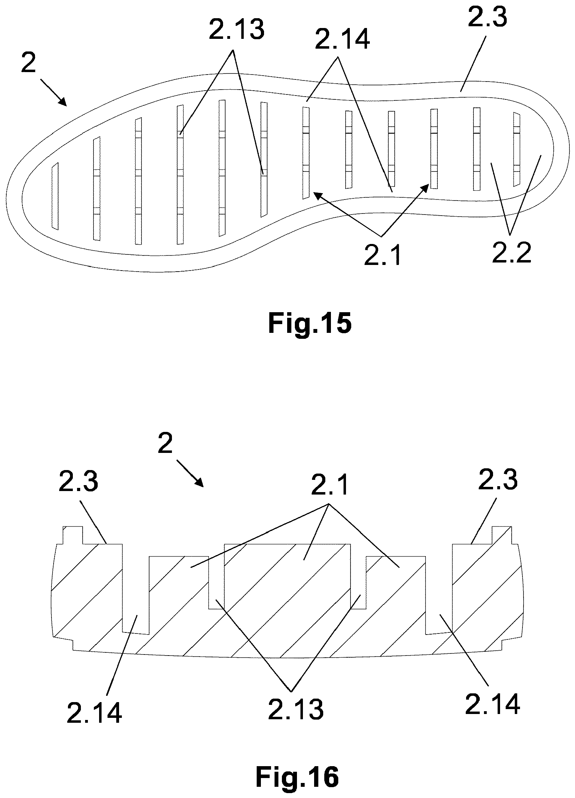

On the other hand, in order to enhance the cushioning effect on the user's foot which bears on the sole (2) (see Figure 15), the protuberances (2.1) are interrupted along their length, with at least one intermediate notch (2.13).

Likewise, the protuberances (2.1) are kept separate from the gluing zone (2.3) of the sole (2) by means of end notches (2.14), and thus, less resistance to cushioning is exerted.

As shown in Figure 16, both the intermediate notches (2.13) and the end notches (2.14) can have a depth smaller or equal than the height of the protuberances (2.1), and can be made in combination with any of the previously described embodiments of orientation and layout of the protuberances (2.1).

Likewise, some or all of the protuberances (2.1), separated by the intermediate notches (2.13), can sit at a height lower than the gluing zone (2.3) of the sole (2).

## Claims

1. A sole for footwear inside of which protuberances are formed (2.1), separated by notches (2.2), wherein the protuberances compress and bend during the footstep, the protuberances (2.1) being arranged inclined in relation to the surface of the footstep, wherein the protuberances (2.1) are formed by an inclined angular partition having a first straight portion (2.11) and a second portion inclined (2.12) in relation to the surface of the footstep, wherein the protuberances (2.1) extend parallel, transversely or obliquely in relation to longitudinal axis of the sole; the protuberances (2.1) are interrupted, along their length, by at least an intermediate notch (2.13), and the protuberances (2.1) are interrupted and/or are separated from a gluing zone (2.3) of the sole (2) by means of end notches (2.14) to enhance their cushioning effect.

## Patentansprüche

1. Sohle für Schuhe, in deren Inneren Vorsprünge (2.1) ausgebildet sind, die durch Kerben (2.2) getrennt sind, wobei sich die Vorsprünge während des Auftretens zusammendrücken und biegen und die Vorsprünge (2.1) in Bezug auf die Trittfläche geneigt angeordnet sind, wobei die Vorsprünge (2.1) durch eine geneigte, winkelförmige Trennwand mit einem ersten geraden Abschnitt (2.11) und einem zweiten Abschnitt (2.12) gebildet sind und Letzterer bezüglich der Trittfläche geneigt ist, wobei die Vorsprünge (2.1) sich parallel, quer oder schräg zur Längsachse der Sohle erstrecken; die Vorsprünge (2.1) sind in Längsrichtung durch mindestens eine Zwischenkerbe (2.13) unterbrochen und die Vorsprünge (2.1) sind unterbrochen und/oder durch Endkerben (2.14) von einer Verklebungszone (2.3) der Sohle (2) getrennt, um ihre Dämpfungswirkung zu verbessern.

## Revendications

1. Semelle pour chaussure à l'intérieur de laquelle des protubérances sont formées (2.1), séparées par des encoches (2.2), dans laquelle les protubérances se compressent et se plient pendant le pas, les protubérances (2.1) étant disposées de manière inclinée par rapport à la surface du pas, dans laquelle les protubérances (2.1) sont formées par une cloison angulaire inclinée ayant une première partie droite (2.11) et une seconde partie inclinée (2.12) par rapport à la surface du pas, dans laquelle les protubérances (2.1) s'étendent parallèlement, transversalement ou obliquement par rapport à l'axe longitudinal de la semelle ; les protubérances (2.1) sont interrompues, le long de leur longueur, par au moins une encoche intermédiaire (2.13) et les protubérances (2.1) sont interrompues et/ou sont séparées d'une zone de collage (2.3) de la semelle (2) au moyen d'encoches d'extrémité (2.14) pour améliorer leur effet d'amortissement.
